# EUROPEAN PATENT SPECIFICATION

(11) **EP 2 311 315 B1**
(45) Date of publication and mention of the grant of the patent: **13.06.2012**
(21) Application number: 09425407.5
(22) Date of filing: 15.10.2009
(51) Int. Cl.: A01K 27/00

(54) **Adjustable circular collar for dogs or other pets**
Einstellbares ringförmiges Halsband für Hunde oder andere Haustiere
Collier circulaire réglable pour chiens ou autres animaux domestiques

(43) Date of publication of application: 20.04.2011
(73) Proprietor: FERPLAST SPA, 36070 Castelgomberto (IT)
(72) Inventor: Vaccari, Carlo, 36070 Castelgomberto (VI) (IT)
(74) Representative: Sandri, Sandro

(56) References cited:
- WO-A-2008/155791
- FR-A- 2 841 739
- US-B1- 6 715 449

## Description

### TECHNICAL FIELD

This invention refers to an adjustable circular collar, which can guarantee a perfect circular shape around the neck of a dog.

This is a collar, in various sizes and dimensions, which differs from prior art in that it always maintains a perfect circular shape around the neck of the dog, thus ensuring maximum comfort for the animal: it does not, in fact, present areas of localised deformation or any lack of padding, which can cause pain or be uncomfortable for the dog in the neck area.

The collar according to the invention achieves the results indicated above thanks to the presence of particular padding around the entire circumference of the animal's neck, and to the presence of a toothed band designed to avoid the limitations of traditional buckles.

This invention can be applied in the sector of accessories for pets, in particular in the sector of accessories, such as collars, for pets such as, for example, dogs or even cats or similar.

### PRIOR ART

It is known that pets, such as dogs, are usually taken for walks using leads equipped with a grip to be held by the person walking the dog and a coupling element, generally the spring clip type, for securing the lead to a collar fitted around the animal's neck.

It is also known that traditional collars consist of a strap of a certain thickness and width, the ends of which can be joined together by any suitable means in order to form a circle designed to wrap around the dog's neck or part of its body.

The collar also comprises a ring for coupling with the spring clip attached to the cord of the lead so that the person walking the dog always has complete and safe control of the animal during the walk.

The coupling means for the ends of the strap can consist of a buckle, a clip coupling or a bayonet type coupling, in any case sufficient to guarantee a good safety margin against any breakages due to abrupt movements of the animal, especially if it is a large size.

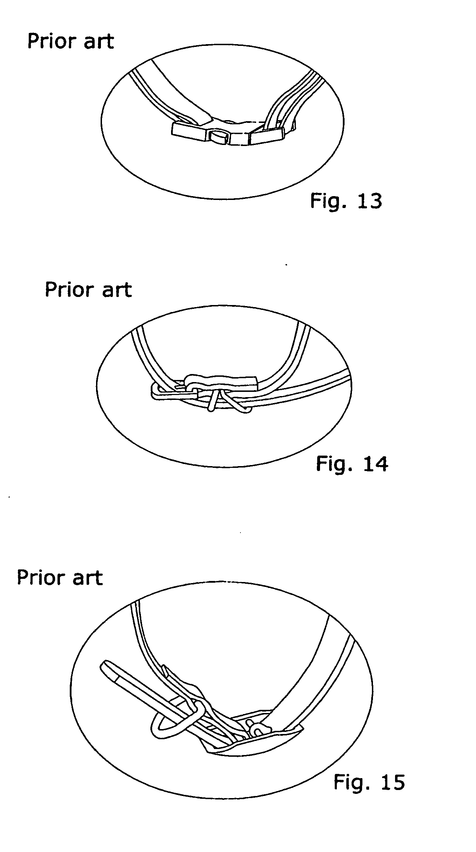

Figures 13 to 15 show schematic views of collars manufactured according to prior art, and thus with critical or "uncomfortable" zones.

One problem related to traditional collars is represented by the fact that these collars are equipped with specific plastic or metal buckles or clips which allow the ends of the collar to be fastened together around the neck of the pet, that is to say a dog or other animal.

Because of their construction, these coupling elements can cause some problems, the main one being the fact the plastic or metal buckle or clip can cause deformation of the collar, with the formation of excessively slack zones alternating with zones that are too tight.

In other words, the traditional buckles or clips of known collars cause considerable alteration of the circular shape of the collar, with the formation of critical or "uncomfortable" zones, visible in figures 13, 14 and 15 which represent prior art.

It has also been found that traditional type collars comprise metal buckles in which straps made from leather, nylon or other material are threaded through, overlapping each other and causing localised thicker areas.

These thicker areas alternating with slack areas in the collar caused by the presence of the buckle cause additional deformation to the circular shape of the collar, with inevitable discomfort for the animal wearing the collar, and the formation of additional critical or "uncomfortable" zones.

In fact, since the collar must adapt well to the animal's neck, it must be made in such a way to avoid conditions of excessive tightness as well as slack closures or areas, in order be produced in batches of different sizes according to the size of the pet for which it is intended.

In addition, from an industrial point of view, the need to have a variety of different sizes of collars is not economically advantageous since this makes it necessary to have different production lines and more storage space for numerous series of collars of different lengths according to the size of the animal.

Document WO 2008/155791 A1 discloses an adjustable collar for pets comprising a strap provided with flaps fitted with reciprocal coupling means and a ring designed to be attached to a spring clip of a lead, wherein the means for coupling the ends of the strap consist of toothed bands designed to co-operate with corresponding ratchets, allowing blocking and release of said toothed bands.

Documents FR-A-2841739 and US-A-6715449 disclose an adjustable collar for pets comprising a toothed band mounted at an end thereof and a ratchet mounted at the other end of the collar.

### DESCRIPTION OF THE INVENTION

This invention proposes to provide a collar for pets such as dogs or similar, which can eliminate or at least reduce the problems described above.

The invention also proposes to provide a collar for pets which respects as closely as possible the circular shape and uniformity of the collar, that is to say avoiding the formation of deformations, or thicker areas and slack areas, caused by the buckles or clips for fastening the collar around the animal's neck or to couple the lead to the collar.

This is achieved by means of a collar for pets such as dogs or similar, the features of which are described in the main claim.

The dependent claims of this solution describe advantageous embodiments of the invention.

The main advantages of this solution concern the fact that the collar makes it possible to achieve the following aims.

First of all, the collar maintains a perfectly circular shape regardless of the size of the animal's neck and guarantees that the collar is comfortable for the animal.

In addition, adjustment of the collar to the size of the animal's neck is carried out only once; in fact, once the excess padding (under the toothed band) has been cut off the collar will always close to the same exact size as the animal's neck without having to be adjusted every time it is put on.

The collar according to the invention guarantees comfort for the animal around the entire circumference of its neck, since there are no unpadded areas in direct contact with the neck.

### DESCRIPTION OF THE DRAWINGS

Other features and advantages of the invention will become clear on reading the description given below of one embodiment of the invention, provided as a non-binding example, with the help of the accompanying drawings in which:

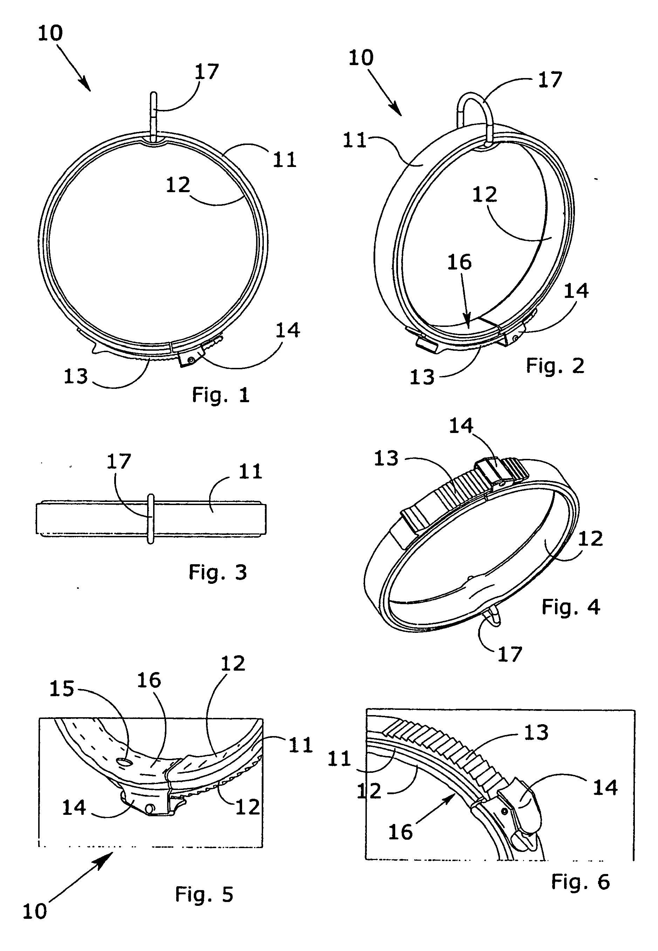

- figure 1 represents the schematic front view of a collar according to the invention;
- figure 2 represents a schematic view of the collar in perspective;
- figure 3 represents a schematic view of the collar in profile;
- figure 4 is a schematic view of the collar in a perspective which shows the toothed coupling part;
- figures 5 and 6 represent schematic views of the collar according to the invention showing two details of its coupling;
- figures 7, 8 and 9 represent schematic views of the collar according to the invention showing additional details of its coupling;
- figures 10 to 12 show schematic views of the collar according to the invention in three stages of adjustment of the size;
- figures 13 to 15 show schematic views of the collar according to prior art, with their critical or "uncomfortable" areas.

### DESCRIPTION OF ONE EMBODIMENT OF THE INVENTION

In the figures, the reference number 10 indicates in general a collar, in the case in question an adjustable collar 10 which substantially consists of an assembly of an external strap 11 and adjustable inner padding 12.

The outer part of the collar 10, that is to say the strap 11, is preferably made from leather to form a loop of appropriate dimensions and comprises two ends which can be separated in order to fasten the collar around the animal's neck.

These two ends can be joined together by means of a toothed band 13, fixed to one of the ends of the strap 11, this band working in conjunction with a ratchet 14, fixed to the other end.

The padding 12, made from soft but thick material, is in turn fixed along the entire inner length of the strap 11, with which it forms a single body.

According to the invention, the toothed band 13 is fixed by the restraining action of a rivet 15, at some distance formed by the two half-ends 11 and 12, in such a way that the end 16 can be adjusted to size in this area, according to the size of the animal's neck.

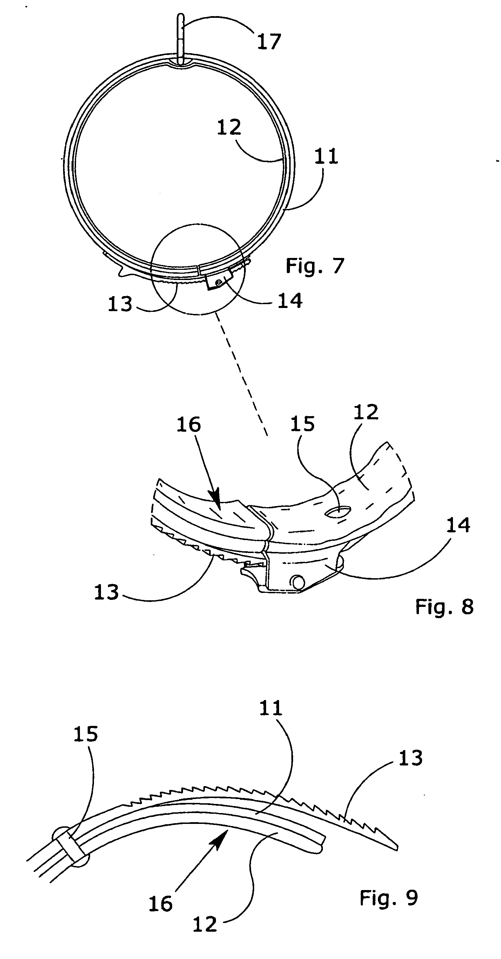

The end 16 of the collar formed by the two half-ends 11 and 12, which is not attached to the toothed band 13, is clearly visible in figure 9.

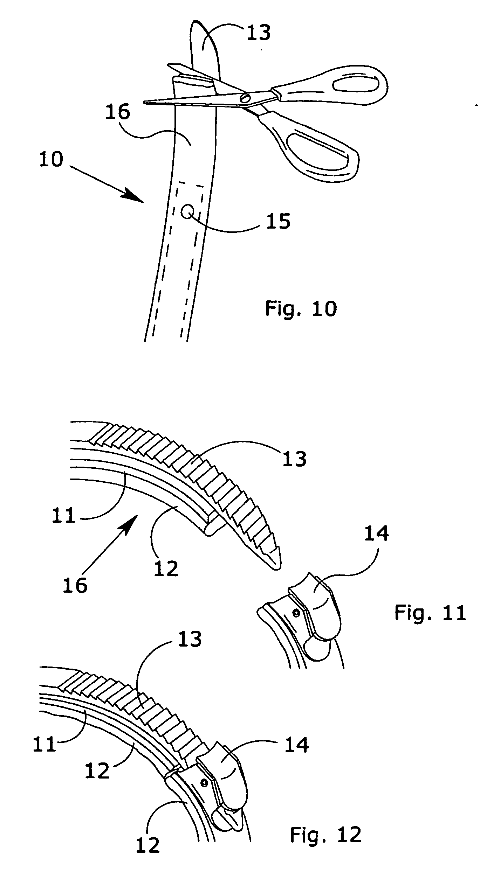

As can be seen in figures 10, 11 and 12, to adjust the collar to the neck of the animal and maintain the shape of the collar in a substantially circular form, especially in the inner padded part, it is necessary to cut the end 16 of the collar in the free area below the toothed band 13.

The end 16 of the collar is cut in such a way that the two end flaps can fit together when the collar is fastened around the animal's neck, forming a perfect circle without protrusions or recesses.

The strap 11 is made from tear- and wear-resistant material, for example from leather, while the padding 12 is made from soft composite plastic material.

Finally, the collar 10 can be fitted with a ring 17, suitable for attaching a lead to the collar, for example by means of a spring clip.

The toothed band 13 is fixed to the collar by means of two rivets or by one rivet combined with stitching, or by lines of stitching, in order to prevent the rotation of the band when subjected to traction and thus maintain the collar in a perfect circle.

Once the excess material has been cut from the end 16 of the collar 10, when the collar is wrapped around the neck of the animal, as can be seen in figure 12, the two ends of the strap/padding 11/12 match perfectly together on the same plane, remaining on the same level and respecting the internal circular continuity of the collar.

It can be seen that the collar 10 according to the invention satisfies the predetermined aims, in particular being adaptable to pets of any size and maintaining a constantly circular and continuous shape also on the inner part in contact with the animal's neck.

The invention is described above with reference to a preferred embodiment. It is nevertheless clear that the invention is susceptible to numerous variations which lie within the scope of its disclosure, in the framework of technical equivalents.

## Claims

1. A collar (10) for pets such as dogs or similar, said collar being bendable in order to form a closed loop with two ends that can be joined together by means of a toothed band (13) and a ratchet (14), this collar (10) being **characterised in that** it is constituted by an assembly of an outer strap (11) and an adjustable inner padding (12) joined to each other by means of rivets (15) or by appropriate stitching, whereby said toothed band (13) is fixed to the top of the outer strap close to a first end of said collar at a predetermined distance therefrom, in such a way that a free area is left below said toothed band (13) at one end of the collar (16), which can be cut to size according to the size of the animal's neck, while said ratchet (14) is fixed to the top of the outer strap (11) in correspondence of the second end of said collar, whereby, in operation, both ends of the collar are brought in contact with each other to match on the same plane around the animal's neck, thereby respecting the circular continuity of the collar, said ends being kept in contact with each other by acting on said toothed band (13) and said ratchet (14).

2. A collar (10) according to claim 1, **characterised in that** it comprises a ring (17) or similar, for attaching a lead to the collar, for example by means of an appropriate spring clip.

3. A collar (10) according to claim 1, **characterised in that** said outer strap (11) is either made of leather or a synthetic or composite material.

4. A collar (10) according to claim 1, **characterised in that** said padding (12) is made of a soft composite plastic material.

## Patentansprüche

1. Ein Halsband (10) für Haustiere wie z.B. Hunde, welches so biegbar ist, dass es mit zwei Enden eine geschlossene Schleife bildet, die mit einem gezahnten Band (13) und einer Ratsche (14) zusammengefügt werden können, wobei dieses Halsband (10
**dadurch gekennzeichnet ist,**
**dass** es eine Anordnung bildet, die aus einem äußeren Gurt (11) und einem verstellbaren inneren Futter (12) besteht, die durch Nieten (15) oder entsprechende Heftung aneinander gefügt sind, wobei das gezahnte Band (13) an der Spitze des äußeren Gurtes in Nähe eines ersten Endes des Halsbands an einem gegebenen Abstand von demselben so befestigt ist, dass unter dem gezahnten Band (13) an einem Halsbandende (16) ein freies Stück bleibt, das auf die Halsgröße des Tieres zugeschnitten werden kann, während die Ratsche (14) an der Spitze des äußeren Gurtes (11) gemäß dem zweiten Ende des Halsbands befestigt ist, wodurch bei Gebrauch beide Enden des Halsbands miteinander in Berührung kommen und auf derselben Ebene um den Hals des Tieres zusammenpassen, wodurch die Enden in Bezug auf den kreisförmigen Anschluss des Halsbands miteinander in Berührung bleiben, indem sie auf das gezahnte Band (13) und die Ratsche(14) einwirken.

2. Ein Halsband (10) gemäß Anspruch 1,
**dadurch gekennzeichnet,**
**dass** es einen Ring (17) oder dergleichen zur Befestigung einer Leine am Halsband, z.B. mit einer entsprechenden Klemmfeder, aufweist.

3. Ein Halsband (10) gemäß Anspruch 1,
**dadurch gekennzeichnet,**
**dass** der äußere Gurt (11) entweder aus Leder oder einem synthetischen Material oder Verbundstofif besteht.

4. Ein Halsband (10) gemäß Anspruch 1,
**dadurch gekennzeichnet,**
**dass** das Futter (12) aus einem weichen Plastikmaterial besteht.

## Revendications

1. Collier (10) pour animaux de compagnie tels que des chiens et similaires, ledit coller étant pliable pour former une boucle fermée présentant deux extrémités qui peuvent être reliées ensemble au moyen d'une bande dentée (13) et d'un doigt d'encliquetage (14), ce collier (10) étant **caractérisé en ce qu'**il est constitué par un ensemble formé d'une sangle extérieure (11) et d'un rembourrage intérieur réglable (12) reliés l'un à l'autre au moyen de rivets (15) ou par une couture appropriée, de sorte que ladite bande dentée (13) est fixée à la partie supérieure de la sangle extérieure près d'une première extrémité dudit collier à une distance prédéterminée de celle-ci, de telle manière qu'une zone libre est laissée au-dessous de ladite bande dentée (13) à une extrémité du collier (16), qui peut être coupée à dimension en fonction de la taille du cou de l'animal, tandis que ledit doigt d'encliquetage (14) est fixé à la partie supérieure de la sangle extérieure (11) en correspondance de la seconde extrémité dudit collier, de sorte que, en fonctionnement, les deux extrémités du collier sont amenées en contact l'une avec l'autre pour s'accoupler dans le même plan autour du cou de l'animal, respectant ainsi la continuité circulaire du collier, lesdites extrémités étant maintenues en contact l'une avec l'autre en agissant sur ladite bande dentée (13) et ledit doigt d'encliquetage (14).

2. Collier (10) selon la revendication 1, **caractérisé en ce qu'**il comprend un anneau (17) ou similaire, destinée à attacher une laisse au collier, par exemple au moyen d'une agrafe à ressort appropriée.

3. Collier (10) selon la revendication 1, **caractérisé en ce que** ladite sangle extérieure (11) est soit en cuir soit en un matériau synthétique ou composite.

4. Collier (10) selon la revendication 1, **caractérisé en ce que** ledit rembourrage (12) est en une matière plastique composite souple.
